# EUROPÄISCHE PATENTSCHRIFT

(11) **EP 3 974 901 B1**
(45) Veröffentlichungstag und Bekanntmachung des Hinweises auf die Patenterteilung: **15.05.2024**
(21) Anmeldenummer: 21187701.4
(22) Anmeldetag: 26.07.2021
(51) Int. Cl.: G03B 17/08, B60S 1/54, B60S 1/56

(54) **KAMERASYSTEM**
CAMERA SYSTEM
SYSTÈME DE CAMERA

(30) Priorität: 24.09.2020 DE 102020124959
(43) Veröffentlichungstag der Anmeldung: 30.03.2022
(73) Patentinhaber: MEKRA Lang GmbH & Co. KG, 91465 Ergersheim (DE)
(72) Erfinder: Lang, Werner, 91465 Ergersheim (DE); Centmayer, Stefan, 91465 Ergersheim (DE)
(74) Vertreter: Alpspitz IP

(56) Entgegenhaltungen:
- DE-A1- 10 012 004
- DE-A1-102005 049 566
- DE-A1-102010 041 475
- JP-A- H03 123 335
- JP-A- 2004 182 080
- JP-A- 2006 313 312
- JP-A- 2009 157 194
- JP-A- 2015 152 882

## Beschreibung

### TECHNISCHES GEBIET

Die vorliegende Erfindung betrifft ein Kamerasystem, insbesondere ein Kamerasystem für ein Fahrzeug, das ein Schutzelement aufweist.

### HINTERGRUND

Bei Kraftfahrzeugen ist es gesetzlich vorgeschrieben, sogenannte Sichtfelder rund um das Fahrzeug für den Fahrer im Fahrbetrieb einsehbar zu machen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert. Weitere relevante Normen bzw. Richtlinien schließen beispielsweise die ISO 5721, ISO 5006, ISO 16505, ISO14401 und die EU 167/2013 ein. Neben den gesetzlich geforderten Sichtfeldern werden oftmals weitere Bereiche rund um das Fahrzeug, sogenannte Sichtbereiche, durch Einrichtungen zur indirekten Sicht einsehbar gemacht. Sichtbereiche können gesetzlich vorgeschriebene Sichtfelder enthalten.

Üblicherweise wird die Betrachtung der Sichtfelder mit einem oder mehreren Spiegeln ermöglicht. Jedoch haben Spiegel einige Nachteile. Zum Beispiel zeigen Spiegel dem Fahrer lediglich Objekte, die auf derselben Seite des Spiegels wie der Fahrer sind. Irgendein Objekt hinter einem Spiegel kann nicht durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sechs oder mehr Spiegel auf, die um die Außenseite des Fahrzeugs herum montiert sind, von denen die meisten konvex und verzerrt sind, was es schwierig für den Fahrer macht, auf alle relevanten Spiegel zur selben Zeit zu achten. Dennoch gibt es um diese Fahrzeuge trotz all der Spiegel üblicherweise immer noch blinde Flecke in den Sichtbereichen, d.h. den Bereichen, in denen keine Sichtfelder sind.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen wird kontinuierlich ein Bild erfasst und ermittelt bzw. bearbeitet und ggf. gespeichert. Die (Video-)Daten, die von einer Bilderfassungseinheit mit einer Bildsensoreinrichtung erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, dass die Sichtfelder jederzeit für den Fahrer permanent einsehbar sind. Gleichzeitig liefern Sichtsysteme eine verbesserte Nachtansicht, flexiblere, ergonomischere Anordnungsmöglichkeiten und die Möglichkeit, größere Sichtbereiche mit einer geringeren Verzerrung einzusehen.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon, oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt bzw. einsehbar gemacht. Dies gilt zumindest für als permanent einsehbar vorgeschriebene Sichtfelder für alle Fahrzeugzustände, bei denen der Zündschalter eingeschaltet ist und/oder bevorzugter Weise zum Beispiel gekoppelt an einen Sensor, der ein entsprechendes Signal empfängt, beispielsweise eine Türöffnungssignal oder ein Zündungseinschaltsignal.

Für solche Spiegelersatzsysteme kommen zum Teil Kameras mit sehr speziellen Objektivanordnungen bzw. Linsensystemen, die aus einer Mehrzahl an einzelnen Linsen zusammengesetzt sind, zum Einsatz, um den speziellen Anforderungen im Hinblick auf die Abbildungseigenschaften der Kamera, der Verzeichnung über die Objektivöffnung, usw. Rechnung zu tragen. Solche Objektivanordnungen werden dabei oftmals nur in einem Teilbereich der maximal möglichen Objektivöffnung genutzt, d.h. es wird ein Teilbild aus dem gesamten, mittels des Objektivs erfassbaren Bild ausgeschnitten und zur Darstellung verwendet, da die Objektivanordnung hauptsächlich in dem genutzten Bereich die gewünschten Eigenschaften aufweist und in anderen Bereichen, z.B. Randbereichen, diese nicht aufweist.

Üblicherweise werden die Kamerasysteme an einer Außenseite des Kraftfahrzeugs montiert, um einen Bereich um das Fahrzeug aufzunehmen. Durch die Montage an einer Außenseite des Kraftfahrzeugs sind die Kamerasysteme jedoch Umwelteinflüssen, wie z.B. Verschmutzungen oder Niederschlag ausgesetzt. Insbesondere können sich Wassertropfen, z.B. Regentropfen oder Niederschlag durch Nebel oder Schnee, auf dem optischen Element der Kamera, wie z.B. der Linse der Kamera oder generell einem die Kamera nach außen hin abschließenden Element, ablagern und dadurch die von der Kamera aufgenommenen Bilddaten der Fahrzeugumgebung beeinträchtigen. Insbesondere kann es durch Wassertropfen auf der Kameralinse vorkommen, dass Objekte oder Personen in der Fahrzeugumgebung teilweise oder vollständig durch den Fremdkörper verdeckt werden und so dem Fahrer nicht oder nicht zufriedenstellend auf einer üblicherweise in der Fahrerkabine montierten Wiedergabeeinrichtung angezeigt werden. Dies wiederum führt dazu, dass der Fahrer die Objekte oder Personen nicht ausreichend oder gar nicht erkennt. Dadurch kann es zu Kollisionen mit den vom Fahrer nicht erkannten Objekten oder Personen und so möglicherweise zu schweren Unfällen kommen.

Aus dem Stand der Technik sind daher Kamerasysteme bekannt, die Wassertropfen mittels eines Luftstrahls, einer Wischvorrichtung, wie z.B. einem Wischerarm oder über eine drehende Linse oder einer hydrophoben Beschichtung der Linse entfernen. Schließlich ist es auch bekannt, einen Zylinder um die Linse zu positionieren, um Wassertropfen daran zu hindern, auf die Linse zu fließen.

Die Kamerasysteme aus dem Stand der Technik haben jedoch den Nachteil, dass bei wechselnden Umweltbedingungen, wie z.B. Wechsel der Windrichtung oder der Menge an Niederschlag, die Wassertropfen auf der Linse nur unzureichend entfernt werden und dadurch eine realitätsgetreue und für den Fahrer des Fahrzeugs gut erkennbare Abbildung der Fahrzeugumgebung nicht möglich ist.

Eine Vorrichtung zur Verhinderung von Wassertropfen auf einem Sichtfenster einer wasserdichten Kamera ist aus der JP H03-123335 A bekannt. Eine Kamera und eine Antriebsunterstützungseinrichtung ist aus der JP 2015-152882 bekannt.

### ZUSAMMENFASSUNG

Entsprechend ist es eine Aufgabe der vorliegenden Erfindung, ein Kamerasystem für ein Fahrzeug, insbesondere für ein Nutzfahrzeug, vorzusehen, das bei allen Umweltbedingungen und auch bei raschen Wechseln zwischen verschiedenen Umweltbedingungen eine zuverlässige Entfernung von Wassertropfen von dem optischen Element ermöglicht.

Die oben genannte Aufgabe wird durch ein Kamerasystem für ein Fahrzeug mit den Merkmalen des Anspruchs 1 gelöst. Bevorzugte Ausführungsformen sind in den abhängigen Ansprüchen angegeben.

Der Erfindung liegt der Gedanke zugrunde, sich bei der Entfernung von Wassertropfen nur auf den für eine Abbildung der Fahrzeugumgebung relevanten Teil des optischen Elements, d.h. den Nutzbereich des optischen Elements, zu konzentrieren. Bei einer Abbildung einer Fahrzeugumgebung wird üblicherweise ein wesentlich größerer Teil der Fahrzeugumgebung von einer Bilderfassungseinheit aufgenommen als tatsächlich für den Fahrer interessant und entsprechend angezeigt wird. Beispielsweise kann es vorkommen, dass aufgrund einer bestimmten Linsenanordnung oder Linsengeometrie nur ein verhältnismäßig geringer Teil der aufgenommenen Fahrzeugumgebung für eine Abbildung derselben auf einer Wiedergabeeinheit genutzt werden. Der verbleibende Teil der aufgenommenen Fahrzeugumgebung, wird dem Fahrer nicht auf der Wiedergabeeinheit angezeigt. Entsprechend ist es für eine zuverlässige und realitätsgetreue Abbildung der Fahrzeugumgebung irrelevant, ob sich auf dem Teil des optischen Elements, das den nicht abzubildenden Bereich der Fahrzeugumgebung aufnimmt, ein oder mehrere Wassertropfen befinden oder nicht, oder ob auf diesen Teil des optischen Elements überhaupt Lichtstrahlen zur Abbildung einfallen können oder nicht. Mit anderen Worten werden Wassertropfen auf dem Teil des optischen Elements, das den nicht abzubildenden Bereich der Fahrzeugumgebung aufnimmt, ohnehin nicht auf der Wiedergabeeinheit abgebildet, weswegen sie dort verbleiben können, bzw. es ist unerheblich, ob mit diesem Teil des optischen Elements die Fahrzeugumgebung erfasst wird oder nicht. Es ist ausschließlich eine Entfernung von Wassertropfen auf dem Teil des optischen Elements erforderlich, das den anzuzeigenden Bereich der Fahrzeugumgebung aufnimmt und damit den Nutzbereich des optischen Elements bildet, dort jedoch mit großer Zuverlässigkeit.

Allgemein ist das optische Element das Element der Bildaufnahmeeinheit, das sich in einem optischen Pfad, d.h. dem Weg, den das Licht zurücklegt, wenn es aus der Lichtquelle oder der Fahrzeugumgebung durch die Bildaufnahmeeinheit hindurch läuft, zwischen der Position, an der das Licht in die Bildaufnahmeeinheit eintritt, und der Position befindet, an der das Licht auf den Bildsensor auftrifft. Mit anderen Worten handelt es sich bei dem optischen Element um ein Element der Bildaufnahmeeinheit, das sich bis zur äußersten Position der Bildaufnahmeeinheit erstreckt und damit das Element der Bildaufnahmeeinheit bildet, das auf die Umgebung des Fahrzeugs gerichtet ist. Das optische Element weist entsprechend einen Lichteinfallsbereich auf, auf den die Lichtstrahlen aus der Fahrzeugumgebung auftreffen und in den sie hineingeleitet werden. Der Lichteinfallsbereich ist somit der Bereich des optischen Elements, durch den die Lichtstrahlen hindurch laufen und durch den sie folglich optisch geleitet werden. Der Nutzbereich des optischen Elements ist Teil des Lichteinfallsbereichs des optischen Elements. Das optische Element kann beispielsweise ein Objektiv sein. Das optische Element wird üblicherweise über eine Halterung in dem Kamerasystem gehalten. Die Halterung kann eine das optische Element von außen umschließende Hülse oder eine das optische Elemente von außen ergreifende Klammer sein, wie z.B. ein Objektivring. Andere Ausgestaltungen für die Halterung sind abhängig von der Geometrie und dem Aufbau des optischen Elements denkbar.

Um den für eine Abbildung der Fahrzeugumgebung relevanten Teil des optischen Elements vor einer Ablagerung von Wassertropfen zu schützen, weist das erfindungsgemäße Kamerasystem ein Schutzelement mit einer Sichtöffnung auf. Das Schutzelement ist ein zu dem optischen Element separates Bauteil, das im in dem Kamerasystem montierten Zustand auf dem Lichteinfallsbereich derart angeordnet ist, dass die darin vorgesehene Sichtöffnung den für die Abbildung der Fahrzeugumgebung relevanten Teil des optischen Elements frei lässt, z.B. ist das Schutzelement ein Deckel-ähnliches Bauteil. Die Sichtöffnung ist eine Öffnung bzw. Aussparung in dem Schutzelement, die eine Verbindung von der Außenseite des Schutzelements zu einer Innenseite des Schutzelements vorsieht. Die Sichtöffnung weist geeigneter Weise eine geometrische Form auf, die im auf dem Lichteinfallsbereich des optischen Elements montierten Zustand die einfallenden Lichtstrahlen auf ein Maß reduziert, das für die Abbildung der Fahrzeugumgebung auf der Wiedergabeeinheit erforderlich ist. Nicht für die Abbildung relevante Bereiche des optischen Elements werden verdeckt, so dass durch diese abgedeckten Bereiche keine Lichtstrahlen in das optische Element eindringen. Dabei ist die geometrische Form der Sichtöffnung vorzugsweise an den Nutzbereich des optischen Elements angepasst. Im montierten Zustand des Schutzelements ist die Sichtöffnung derart angeordnet, dass der Nutzbereich des optischen Elements zur Fahrzeugumgebung freigelegt ist. Die Lichtstrahlen aus der Fahrzeugumgebung können somit durch die Sichtöffnung in den Nutzbereich des optischen Elements einfallen bzw. eindringen. Gleichzeitig wird die Menge des potenziell auf das optische Element auftreffenden Wassers verringert, indem ein Teil vollständig abgedeckt ist und der Nutzbereich zumindest seitlich geschützt wird durch das Schutzelement.

Das Schutzelement ist derart auf dem optischen Element angeordnet, dass zwischen optischem Element und Schutzelement wenigstens ein Spalt vorhanden ist. Der Spalt erstreckt sich von dem Rand des Nutzbereichs bis zu einer Wasserabführöffnung. Die Wasserabführöffnung ist entfernt von dem Nutzbereich angeordnet und ist zur Fahrzeugumgebung offen. Entfernt von dem Nutzbereich bedeutet vorliegend, dass die Wasserabführöffnung einen merklichen Abstand zu dem Nutzbereich aufweist, bevorzugt am Ende des Spalts angeordnet ist. Sie öffnet sich nicht zum Nutzbereich hin.

Die Wasserabführöffnung kann eine in das Schutzelement eingebrachte Bohrung oder Nut sein, die eine Verbindung zwischen einer Innenseite und einer Außenseite des Schutzelements herstellt. Alternativ kann die Wasserabführöffnung aber auch dadurch gebildet werden, dass das Schutzelement wenigstens teilweise an seinem von der Sichtöffnung entfernten Ende nicht bis an die Halterung heranragt und so einen Freiraum zwischen Halterung und Schutzelement vorsieht, durch den Wasser zu einer Fahrzeugumgebung abfließen kann. Die Wasserabführöffnung stellt somit eine Verbindung zwischen dem Spalt und der Fahrzeugumgebung dar. Dadurch können Wassertropfen, die sich auf dem Nutzbereich des optischen Elements befinden, in den Spalt hineinfließen und durch die Wasserausführöffnung wieder zur Fahrzeugumgebung austreten. Dadurch dass der Nutzbereich ein verhältnismäßig kleiner Bereich des gesamten Lichteinfallsbereichs ist, liegen die Wassertropfen zumeist schon am Rand des Nutzbereichs oder in dessen unmittelbarer Nähe und damit nahe des Spalts und können dadurch leicht in diesen hineinfließen. Wassertropfen, die nicht in der Nähe des Spalts, d.h. eher mittig auf dem Nutzbereich liegen, können durch eine konvexe Krümmung des optischen Elements, Vibrationen während des Fahrbetriebs, Fahrtwind oder Kombinationen davon in Richtung Rand des Nutzbereichs getrieben werden und anschließend in den Spalt hineinflie-ßen. Ist der Wassertropfen einmal in den Spalt eingedrungen, fließt er in Richtung der Wasserabführöffnung, wo er aus dem Schutzelement abgeführt wird. Dadurch dass die Wasserabführöffnung entfernt von dem Nutzbereich angeordnet ist, wird vermieden, dass der durch den Spalt abgeführten Wassertropfen erneut auf den Nutzbereich gelangt und aufgrund seines Verbleibens dort die Sicht auf die Fahrzeugumgebung behindert oder beeinträchtigt.

Das Schutzelement kann eine Beleuchtungseinrichtung aufweisen zum Ausleuchten und damit für eine verbesserte Aufnahme der Fahrzeugumgebung. Die Beleuchtungseinrichtung kann z.B. ein Infrarotlicht sein.

Ferner kann das Schutzelement eine definierte Codierung zum Anbringen an der richtigen Position relativ zum optischen Element aufweisen. Die Codierung kann eine in Längsrichtung auf der Halterung des optischen Elements verlaufende Nut sein, in die ein entsprechender Vorsprung an dem Schutzelement eingreift und das Schutzelement radial gegen eine Verdrehung sichert. Alternativ können das Schutzelement und die Halterung für das optische Element jeweils eine farbige Markierung aufweisen, die in richtiger Stellung zueinander einem Monteur oder Nutzer des Kamerasystems anzeigen, dass das Schutzelement sich in der geeigneten Position relativ zu dem optischen Element befindet. So wird sichergestellt, dass die Sichtöffnung sich im montierten Zustand von Schutzelement und optischem Element exakt über dem Nutzbereich des Lichteinfallsbereichs des optischen Elements befindet und die Fahrzeugumgebung zuverlässig über den Nutzbereich aufgenommen werden kann.

Das Schutzelement kann entweder über ein Gewinde auf die Halterung bzw. das optische Element aufgeschraubt sein oder kann mit der Halterung bzw. dem optischen Element geklemmt sein. Grundsätzlich ist die Art der Befestigung des Schutzelements an der Kamera von der Ausgestaltung des Schutzelements abhängig und davon, ob das Schutzelement ein eigenständiges Bauteil ist oder Teil eines Kameragehäuses oder eines Kamerahalters ist.

Das Schutzelement kann zwei- oder mehrteilig ausgebildet sein. Beispielsweise kann das Schutzelement aus einer Deckplatte bestehen, die über dem Lichteinfallsbereich des optischen Elements angeordnet wird und kann aus einem mit der Deckplatte (z.B. über ein Gewinde) verbundenen Ring bestehen, der das optische Element oder die Halterung über dessen Umfang umgibt.

Das Schutzelement kann mit einer hydrophilen Beschichtung versehen sein. Eine hydrophile Beschichtung bezeichnet eine wasseranziehende Beschichtung, wie z.B. Nanobeschichtungen durch mineralische Partikel, die das Eindringen von Wasser in dem Spalt begünstigt.

Vorzugsweise ist der Spalt derart dimensioniert ist, dass er bei dem Aufnehmen des Wassertropfens eine Kapillarwirkung entfaltet. Unter einer Kapillarwirkung wird allgemein das Verhalten von Flüssigkeiten verstanden, bei Kontakt mit Kapillaren, d.h. z.B. ausreichend engen Röhren, Spalten oder Hohlräumen in Feststoffen, gegen die Gravitationskraft in die Kapillare hineinzuströmen, z.B. in der Kapillare nach oben zu steigen. Diese Effekte werden durch die Oberflächenspannung von Flüssigkeiten selbst und der Grenzflächenspannung von Flüssigkeiten mit der festen Oberfläche (im Beispiel: des Glases) hervorgerufen. Vorliegend ist der Spalt folglich derart ausgelegt, dass er eine Kapillare bildet. Bei Berührung eines Wassertropfens mit der Öffnung des Spalts wird der Tropfen durch den Kapillareffekt in den Spalt gesogen, d.h. es entsteht eine Sogwirkung durch den Kapillareffekt, durch die der Tropfen in den Spalt hinein gezogen wird. Für das Erreichen einer Kapillarwirkung kann der Spalt beispielsweise in Abhängigkeit von der zu entfernenden Tropfengröße dimensioniert sein. Z.B. kann es sein, dass Tropfen kleiner 0,5 mm bei der Abbildung der Fahrzeugumgebung als nicht störend angesehen werden. Der Spalt ist dann so ausgelegt, dass er zumindest bei Tropfen gleich oder größer als 0,5 mm eine Kapillarwirkung hervorruft.

Nach einer bevorzugten Ausführungsform weist das optische Element eine hydrophobe Beschichtung auf, die eine ausreichende Lichtdurchlässigkeit zur Aufnahme der Fahrzeugumgebung aufweist. Unter einer hydrophoben Beschichtung ist eine wasserabweisende Beschichtung zu verstehen, die durch geeignete Oberflächenbehandlung des optischen Elements aufgebracht wird oder durch geeignetes Material ausgebildet ist. Eine wasserabweisende Beschichtung hat den Vorteil, dass Wassertropfen, die sich nicht am Rand des Nutzbereichs und damit in unmittelbarer Nähe zu dem Spalt befinden, durch Fahrzeugvibrationen während des Fahrbetriebs, Fahrtwind oder Kombinationen davon leicht zum Rand des Nutzbereichs rutschen können. Ferner wird durch eine hydrophobe Beschichtung die Kapillarwirkung dadurch verstärkt, dass ein Kontaktwinkel zur Flüssigkeit erhöht wird und der Wassertropfen bestrebt ist, in den Spalt zu fließen. Unter dem Kontaktwinkel wird der Winkel zwischen Wassertropfen und der Oberfläche des Nutzbereichs des optischen Elements verstanden. Bei einem geringen Kontaktwinkel liegt der Wassertropfen relativ flach auf dem Nutzbereich auf, wohingegen bei einem großen Kontaktwinkel der Wassertropfen eher seine Tropfenform beibehält und so eine geringere Berührfläche zwischen Wassertropfen und Nutzbereich vorliegt. Alternativ kann eine hydrophobe und damit wasserabweisende Oberfläche auch durch Vorsehen einer gewissen Rauheit oder Narbung erzielt werden. Eine hydrophobe Beschichtung des optischen Elements schützt dieses darüber hinaus vor Verschleiß. Bei Vorliegen einer hydrophoben Beschichtung wird der Spalt in Abhängigkeit von hydrophober Beschichtung und der damit vorgegebenen Tropfenform dimensioniert. Alternativ oder zusätzlich kann der Spalt auch anhand der Krümmung des ersten optischen Elements dimensioniert werden.

Vorzugsweise weist der Spalt einen sich über seine Erstreckung veränderlichen Querschnitt auf. Dadurch kann insbesondere die Kapillarwirkung erhöht werden, weil der Spalt für Wassertropfen verschiedener Durchmesser bzw. Größen eine Kapillarwirkung erzeugt. Beispielsweise kann der Spalt am Rand der Sichtöffnung eng und sich in Richtung Wasserabführöffnung aufweitend auszubilden. Dadurch wird gewährleistet, dass Tropfen aller Größen und Geometrien in den Spalt strömen können und dabei von Beginn an ungeachtet der Tropfengröße eine Kapillarwirkung hervorgerufen wird. Es ist aber auch denkbar, dass der Querschnitt des Spalts über seine Erstreckung mit zunehmender Entfernung von der Sichtöffnung abnimmt. So wird nur für relativ große Wassertropfen auf dem Nutzbereich eine Kapillarwirkung erzeugt, kleinere Wassertropfen fließen ohne Kapillareffekt in den Spalt. Jedoch wird durch die zunehmende Verengung des Spalts in Bewegungsrichtung des Wassertropfens auch für kleinere Wassertropfen eine Kapillarwirkung erzielt und Wassertropfen jegliche Größe fließen zuverlässig durch den Spalt zu der Wasserabführöffnung, wo sie zu der Fahrzeugumgebung abgegeben werden.

Der Spalt wird durch wenigstens eine Innennut gebildet, die in wenigstens einer Fläche des Schutzelements vorgesehen ist, die dem Lichteinfallsbereich des optischen Elements zugewandt ist. Die Innennut ist eine Vertiefung in der Fläche des Schutzelements, die wenigstens der Fläche entspricht, die dem Lichteinfallsbereich des optischen Elements zugewandt ist und damit der Innenseite des Schutzelements entspricht, die auf den Lichteinfallsbereich des optischen Elements gerichtet ist. Die Innennut kann sich aber auch über weitere innen liegende Flächen des Schutzelements erstrecken. Bei mehr als einer Innennut können die Innennuten verschiedene sich quer zur Fließrichtung erstreckende Querschnitte aufweisen (verschiedene Größen und/oder Formen). Die Innennut kann sich auch nur in einem Bereich der Innenfläche des Schutzelements erstrecken, wie z.B. nahe der Sichtöffnung.

Die Innennut erstreckt sich vorteilhafter Weise radial zu einer Außenseite der Fläche des Schutzelements, die auf den Lichteinfallsbereich gerichtet ist. Alternativ kann sich die Innennut wendelförmig zu einer Außenseite des Lichteinfallsbereichs erstrecken. Die wendelförmige Erstreckung der Innennut verläuft dabei rings um die Sichtöffnung herum. Weiter alternativ kann sich die Innennut annähernd konzentrisch um die Sichtöffnung des Schutzelements erstrecken.

Zusätzlich oder alternativ kann die Innennut einen sich quer zur Fließrichtung der Tropfen veränderlichen Querschnitt in Richtung einer Außenseite der Fläche des Schutzelements, die auf den Lichteinfallsbereich gerichtet ist, aufweisen. Beispielsweise kann die Innennut derart ausgebildet sein, dass sie sich von einer Innenseite des Schutzelements in Richtung zu einer Außenseite des Schutzelements aufweitet. Alternativ kann die Innennut einen torbogenförmigen, dreieckigen, etc. Querschnitt aufweisen. Auch ein sich in Außenrichtung des Lichteinfallsbereichs quer zur Fließrichtung der Tropfen veränderlicher Querschnitt hat den Vorteil, dass der Kapillareffekt weiter verstärkt wird und die Innennut für eine Vielzahl an Tropfengrößen genutzt werden kann.

Nach einer bevorzugten Ausführungsform bildet die Innennut einen Kanal von der Sichtöffnung bis zu der Wasserabführöffnung. Mit anderen Worten erstreckt sich die Innennut von dem Rand der Sichtöffnung bis zu der Wasserabführöffnung.

Alternativ zu den Ausführungsformen, in denen eine Innennut zum Ableiten des Wassertropfens genutzt wird, kann der Spalt auch dadurch gebildet sein, dass die auf das optische Element gerichtete Fläche des Schutzelements zu dem Lichteinfallsbereich des optischen Elements beabstandet ist (nicht Teil der beanspruchten Erfindung). D.h. das Schutzelement ist insgesamt und damit nicht nur teilweise in einem gewissen Abstand zu dem Lichteinfallsbereich angeordnet und der Spalt erstreckt sich radial über das gesamte Schutzelement.

Um einen definierten Abstandes des Schutzelements von dem optischen Element zu gewährleisten, weist die auf das optische Element gerichtete Fläche des Schutzelements wenigstens eine Rippe auf, die das Schutzelement an dem Halter und/oder dem optischen Element abstützt. Durch zwei Rippen kann eine Innennut gebildet werden. Im Falle mehrerer Rippen können mehrere Innennuten gebildet werden.

Vorzugsweise weist eine Außenseite des Schutzelements eine Geometrie (z.B. wenigstens eine Außennut) auf, die eine Luftverwirbelung verursacht. Die Luftverwirbelung kann eine Bewegung eines sich auf dem Nutzbereich befindlichen Wassertropfens in Richtung Spalt fördem und/oder eine Bewegung eines sich auf der Außenseite des Schutzelements befindlichen Wassertropfens in Richtung Sichtöffnung verhindern. Z.B. kann die Geometrie auf der Außenseite so gestaltet sein, dass der Wassertropfen gezielt von der Sichtöffnung weggeleitet wird, z.B. durch wenigstens eine Außennut, Rippe oder Sicke, die konzentrisch um die Sichtöffnung oder sich radial von der Sichtöffnung weg erstreckend auf der Außenseite des Schutzelements angeordnet sind.

Zusätzlich oder alternativ kann das Schutzelement eine Düse aufweisen, die ein Medium auf den Lichteinfallsbereich des optischen Elements aufbringt und so eine Bewegung eines sich auf dem Nutzbereich befindlichen Wassertropfens in Richtung Spalt fördert und/oder eine Bewegung eines sich auf der Außenseite des Schutzelements befindlichen Wassertropfens in Richtung Sichtöffnung verhindert. Die Düse kann eine Luftdüse sein, die Luft auf den Nutzbereich des Lichteinfallsbereichs aufbringt. Dazu kann die Luftdüse auf der Außenseite des Schutzelements oder im Inneren des Schutzelements, wie beispielsweise in dem Spalt, angeordnet sein. Alternativ kann die Düse eine Luftdüse sein, die außen an oder nahe dem Schutzelement angeordnet ist und entweder Luft auf den Nutzbereich des Lichteinfallsbereichs oder auf eine Außenseite des Schutzelements aufbringt. Weiter zusätzlich oder alternativ kann die Luftdüse so angeordnet sein, dass sie wenigstens teilweise Luft unmittelbar in den Spalt hineinbläst und so die Tropfen zusätzlich in den Spalt hineindrängt.

Das Schutzelement kann ein zu dem optischen Element und der Halterung des optischen Elements separat vorgesehener Deckel sein, kann aber auch Teil eines Kameragehäuses oder eines Kamerahalters sein. Beispielsweise kann das Schutzelement Teil eines Kameraarms sein und über Stege mit diesem verbunden sein. Das Schutzelement ist folglich abnehmbar und auswechselbar ausgebildet, so dass z.B. für eine Reinigung oder eine Wartung bzw. Reparatur des optischen Elements von dem optischen Element entfernt werden kann.

Um die Kamera und insbesondere das optische Element zu enteisen oder Kondenswasser von dem optischen Element zu entfernen, weist das Schutzelement ferner ein Heizelement auf. Das Heizelement ist vorzugsweise eine Heizfolie, kann aber auch ein Heizdraht sein, und ist vorzugsweise in dem Spalt angeordnet. Allgemein kann das Heizelement direkt am Schutzelement befestigt sein, z.B. bei Verwenden eines Heizdrahts durch Einlegen und Umspritzen oder bei Verwenden einer Heizfolie durch Aufkleben. Jedoch darf der Spalt durch das Heizelement nicht komplett verschlossen werden, so dass weiterhin zuverlässig Wassertropfen durch den Spalt abgeführt werden können. Insbesondere bei Vorsehen eines Heizelements kann es voreilhaft sein, wenn das Schutzelement zwei- oder mehrteilig ausgebildet ist, da dies das Installieren des Heizelements erleichtert.

Nach einer bevorzugten Ausführungsform ist das Schutzelement aus einem Polymer, wie beispielsweise einem Thermoplast, einem Duroplast, einem Elastomer oder Kombinationen davon, gebildet. Alternativ kann das Schutzelement auch aus einem metallischen Material gebildet sein. Darüber hinaus ist das Schutzelement vorzugsweise aus einem undurchsichtigen Material hergestellt, kann aber auch aus einem durchsichtigen Material hergestellt sein. Ein undurchsichtiges Material hat den Vorteil, dass keine Lichtstrahlen aus der Fahrzeugumgebung in den Teil des Lichteinfallsbereichs des optischen Elements einfallen, der nicht dem Nutzbereich entspricht. So können keine optischen Störungen, wie Reflexionen oder ähnliches die Abbildung der Fahrzeugumgebung auf dem Bildsensor stören.

Nach einer bevorzugten Ausführungsform weist das Schutzelement eine Shore-Härte von weniger als 60 Shore auf und orientiert sich damit an gesetzlichen Vorgaben (z.B. der UN ECE/R46) für Materialien für Bauteile, die scharfe Kanten aufweisen (wie z.B. Rippen an dem Schutzelement).

Vorzugsweise sind die Sichtöffnung und der Spalt so dimensioniert sind, dass ein Verstellen der Kamera in einem gewissen Bereich ohne Verdecken des Nutzbereichs durch das Schutzelement und Verschließen des Spalts möglich ist. Dazu kann die Sichtöffnung größer sein als der Nutzbereich und der Spalt ist so ausgelegt, dass er trotz eines Verschwenkens der Kamera in einem gewissen Bereich, wie beispielsweise um 10 Grad, nicht durch Annähern der Halterung oder des optischen Elements an das Schutzelement verschlossen wird. Dies ist insbesondere vorteilhaft, wenn das Schutzelement Teil des Kameragehäuses ist und eine Verstellung der Kamera nicht auch eine Verstellung des Schutzelements zu Folge hat, kann jedoch auch für andere Ausgestaltungen, bei denen das Schutzelement unmittelbar auf dem optischen Element und/oder der Halterung angebracht wird, vorteilhaft sein.

Vorzugsweise ist das Kamerasystem Teil eines Spiegelersatzsystems, z.B. wie es in der UNregelung ECE/R46 definiert ist.

Dadurch dass das erfindungsgemäße Kamerasystem sich hinsichtlich Schutz vor und Entfernung von Wassertropfen nur auf einen gewissen Teil des Lichteinfallsbereichs, nämlich den Nutzbereich, des optischen Elements fokussiert, bietet das erfindungsgemäße Kamerasystem gegenüber den aus dem Stand der Technik bekannten Kamerasystemen den Vorteil, dass einerseits vermeiden wird, dass grundsätzlich Wassertropfen auf dem relativ kleinen Nutzbereich des optischen Elements einer Kamera landen, andererseits aber Wassertropfen, die sich dennoch dort absetzen, rasch beseitigt werden. Durch die rasche Beseitigung der Wassertropfen können auch verhältnismäßig große Wassermengen, wie bei Starkregen, bewältigt werden. Das Schutzelement schützt darüber hinaus dem abgedeckten Teil des Lichteinfallsbereichs vor mechanischen Einflüssen, wie Steinschlag oder Kratzer durch Äste, vor optischen Einflüssen, d.h. unerwünschten Lichteffekten, vor Vereisung und vor UV-Strahlung. Das Schutzelement fördert darüber hinaus auf einfache Art und Weise die Integration weiterer Hilfsbauteile, wie beispielsweise der Düse, der Beleuchtung oder des Heizelements. Schließlich ermöglicht das Schutzelement durch die gezielte Anordnung der Sichtöffnung über den Nutzbereich des optischen Elements, dass Lichtstrahlen, die für die abzubildende Fahrzeugumgebung irrelevant oder gar ungünstig sind, daran gehindert werden, auf den Nutzbereich aufzutreffen. So können unter anderem negative Einflüsse auf die Bilddarstellung, wie z.B. Lichtbrechungen oder Reflektionen, vermieden werden.

### KURZE BESCHREIBUNG DER ZEICHNUNGEN

Im Folgenden wird die Erfindung beispielhaft unter Bezugnahme auf die angehängten Figuren beschrieben, in denen:
Fig. 1 eine Draufsicht auf ein Fahrzeug mit einem linken und rechten Kamerasystem zeigt,
Fig. 2 eine schematische Darstellung eines aus dem Stand der Technik bekannten Sichtsystems mit einem Kamerasystem zeigt,
Fig. 3 eine schematische Darstellung eines Sichtsystems mit einem erfindungsgemä-ßen Kamerasystem gemäß einer ersten Ausführungsform in einem ersten Zustand zeigt,
Fig. 4 eine schematische Darstellung des Sichtsystems aus Fig. 3 in einem zweiten Zustand zeigt,
Fig. 5 eine Vorderansicht des erfindungsgemäßen Kamerasystems aus Fig. 4 zeigt,
Fig. 6 eine schematische Darstellung eines Kamerasystems gemäß einer zweiten Ausführungsform zeigt,
Fig. 7 eine schematische Darstellung eines Kamerasystems gemäß einer dritten Ausführungsform zeigt,
Fig. 8 eine schematische Darstellung eines Kamerasystems gemäß einer vierten Ausführungsform zeigt,
Fig. 9 eine schematische Darstellung eines Kamerasystems gemäß einer fünften Ausführungsform zeigt,
Fig. 10 eine perspektivische Darstellung eines Kamerasystems gemäß einer sechsten Ausführungsform in einem montierten Zustand zeigt,
Fig. 11 eine perspektivische Darstellung des Kamerasystems aus Fig. 10 in einem demontierten Zustand zeigt,
Fig. 12 eine schematische Darstellung des Kamerasystems aus Fig. 10 mit einem Heizelement zeigt,
Fig. 13 eine perspektivische Darstellung des Kamerasystems aus Fig. 12 zeigt,
Fig. 14 eine schematische Darstellung des Kamerasystems aus Fig. 8 mit Heizelement zeigt,
Fig. 15 eine schematische Darstellung des Kamerasystems aus Fig. 8 mit Luftdüse zeigt,
Fig. 16 eine perspektivische Darstellung des Kamerasystems aus Fig. 3 in einem montierten Zustand zeigt,
Fig. 17 eine perspektivische Darstellung des Kamerasystems aus Fig. 16 in einem demontierten Zustand zeigt,
Fig. 18 eine schematische Darstellung eines weiteren Kamerasystems zeigt,
Fig. 19 eine Draufsicht auf und einen Schnitt durch das erfindungsgemäße Schutzelement der ersten Ausführungsform zeigt, und
Fig. 20 verschiedene Ansichten eines erfindungsgemäßen Schutzelements zeigt.

### DETAILLIERTE BESCHREIBUNG DER ERFINDUNG

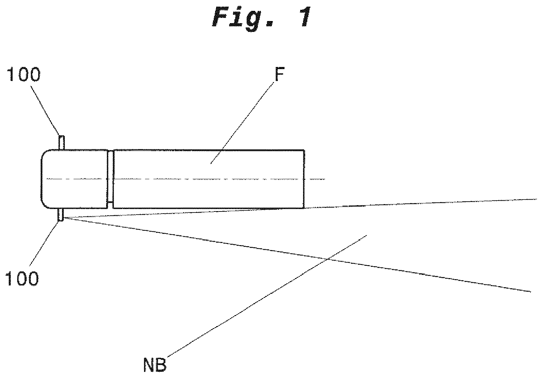

Fig. 1 zeigt eine Draufsicht auf ein Nutzfahrzeug F, vorliegend ein Lastkraftwagen (LKW) mit einer Zugmaschine und einem Auflieger/Anhänger. An der linken und rechten Seite der Zugmaschine ist jeweils ein Kamerasystem 100 angebracht. Das Kamerasystem 100 nimmt über einen Nutzbereich NB eines optischen Elements 11 eine Umgebung um das Fahrzeug F herum auf.

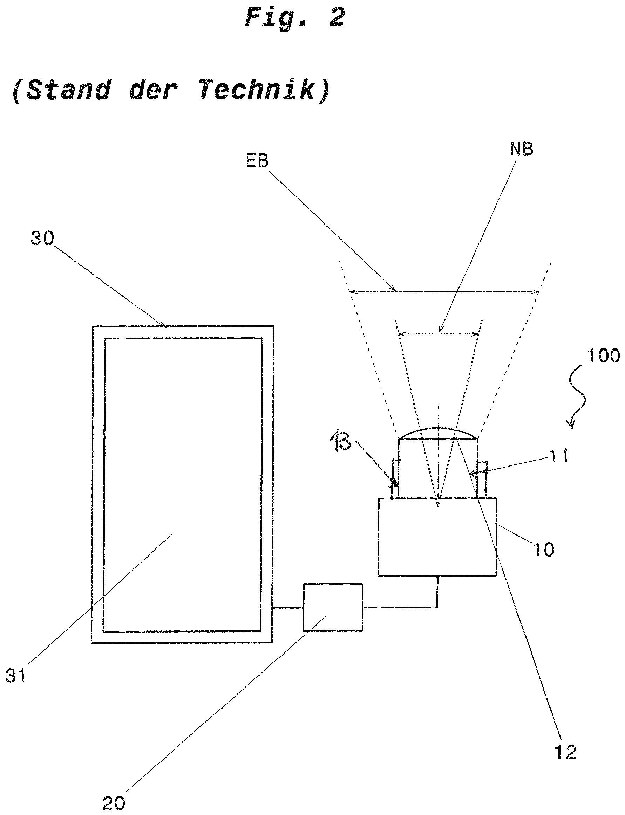

Fig. 2 zeigt schematisch ein aus dem Stand der Technik bekanntes Sichtsystem. Das Sichtsystem weist eine Verarbeitungseinheit 20, wie z.B. eine ECU, und eine Anzeigeeinheit 30, wie einen Monitor, z.B. einen TFT-, LCD-Monitor, auf. Auf der Anzeigeeinheit 30 ist ein angezeigter Bereich 31 vorhanden.

Das Sichtsystem weist ferner ein Kamerasystem 100 auf, das eine Kamera 10, wie z.B. eine Kamera mit einer CMOS- oder einer CCD-Technologie, enthält. Die Kamera 10 weist ein optisches Element 11, wie z.B. ein Objektiv, und eine Halterung 13 auf. Die Halterung 13 hält das optische Element 11 über dessen Umfang. Das optische Element 11 weist an seiner zu einer Fahrzeugumgebung ausgerichteten Fläche 12 einen Lichteinfallsbereich EB auf, der konvex ausgebildet ist. Der Lichteinfallsbereich EB ist der Bereich des optischen Elements 11, in den Lichtstrahlen einer Fahrzeugumgebung in das optische Element 11 eintreten. Ein Teil der in den Lichteinfallsbereich EB eintretenden Lichtstrahlen wird auf einem Bildsensor (nicht gezeigt) abgebildet und projiziert damit die Fahrzeugumgebung auf den Bildsensor. Der Teil des Lichteinfallsbereichs EB, auf den die Lichtstrahlen auftreffen, die auf dem Bildsensor abgebildet werden bzw. auf dem Bereich des Bildsensors abgebildet werden, der dem Fahrer dargestellt wird, wird als Nutzbereich NB des optischen Elements 11 bezeichnet.

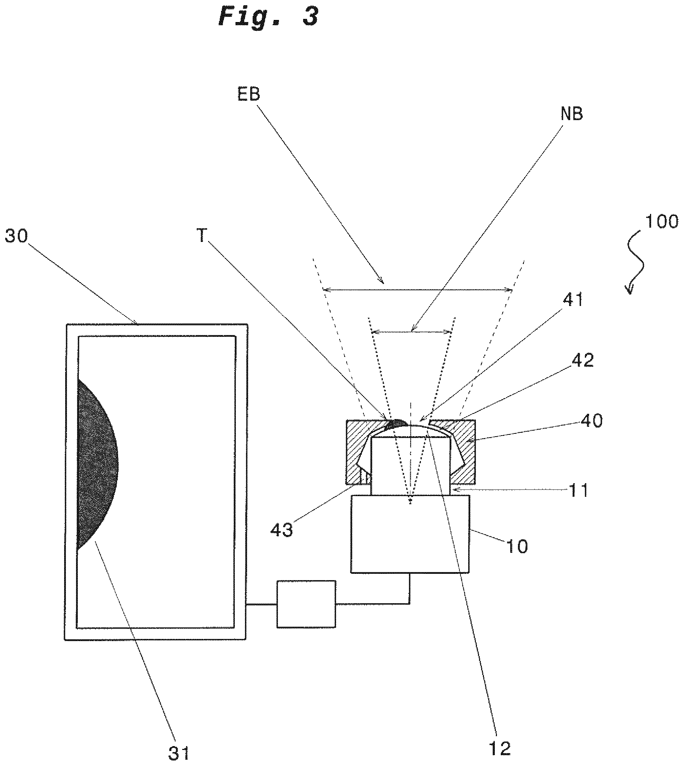

Fig. 3 zeigt schematisch ein Sichtsystem mit einem erfindungsgemäßen Kamerasystem 100. Wie das in Fig. 2 gezeigte Sichtsystem, weist auch das in Fig. 3 gezeigte Sichtsystem eine Verarbeitungseinheit 20 und eine Anzeigeeinheit 30 auf. Das Kamerasystem 100 aus Fig. 3 unterscheidet sich von dem Kamerasystem aus Fig. 2 dadurch, dass es zusätzlich mit einem Schutzelement 40 versehen ist. Das Schutzelement 40 ist als eine Art Deckel ausgebildet, der über dem optischen Element 11 angeordnet ist und an dem optischen Element 11 bzw. der Halterung (nicht gezeigt in Fig. 3) über eine Klemmverbindung befestigt ist. Das Schutzelement 40 ist ein von der Halterung 13 des optischen Elements 11 getrenntes, zusätzliches Bauteil. Das Schutzelement 40 ist insbesondere bevorzugt von dem Kamerasystem 100 entfernbar, ohne das optische Element 11 und dessen Anordnung in seiner Halterung zu zerstören. Mit anderen Worten bilden das optische Element 11, die Halterung 13 und der Bildsensor eine unlösbare Einheit, die für die Funktion der Kamera 10 zusammenwirken müssen, während das Schutzelement 40 ein zusätzliches Bauteil ist, das auf der Kamera 10 vorgesehen werden kann, um den Nutzbereich NB des optischen Elements 11 vor Wasserablagerung zu schützen oder etwaige Wasserablagerungen auf dem Nutzbereich NB des optischen Elements 11 gezielt zu entfernen. Daher kann das Schutzelement 40 auch bei bestehenden Kameras 10 nachgerüstet werden.

Das Schutzelement 40 weist an der Seite, die den Lichteinfallsbereich EB des optischen Elements 11 überdeckt, eine Sichtöffnung 41 auf. Die Sichtöffnung 41 ist eine Durchgangsöffnung, die eine Außenseite des Schutzelements 40 mit einer Innenseite des Schutzelements 40 verbindet. D.h. die Sichtöffnung 41 ist ein ausgesparter, offener Bereich des Schutzelements 40. Die Größe und Geometrie der Sichtöffnung 41 entspricht in etwa der Größe und Geometrie des Nutzbereichs NB. An dem von der Sichtöffnung 41 entfernt gelegenen Ende des Schutzelements 40 ist eine Wasserabführöffnung 43 in Form einer Bohrung in das Schutzelement 40 eingebracht. Die Wasserabführöffnung 43 stellt eine Verbindung zwischen einer Innenseite des Schutzelements 40 und einer Außenseite des Schutzelements 40 her. Das Schutzelement 40 ist derart von dem optischen Element 11 beabstandet, dass zwischen dem optischen Element 11 und dem Schutzelement 40 ein Spalt 42 vorhanden ist.

Wie in Fig. 3 gezeigt ist, befindet sich auf der zu einer Fahrzeugumgebung ausgerichteten Fläche 12 des optischen Elements 11 ein Wassertropfen T. Genauer ist der Wassertropfen T derart auf dem konvexen Lichteinfallsbereich EB des optischen Elements 11 angeordnet, dass er teilweise auf dem Nutzbereich NB des optischen Elements 11 liegt (erster Zustand). Dies hat zur Folge, dass die durch den Nutzbereich NB in das optische Element 11 einfallenden Lichtstrahlen den Wassertropfen T auf dem Bildsensor und damit dem angezeigten Bereich 31 der Anzeigeeinheit 30 abbilden und zwar als dunklen Fleck 32.

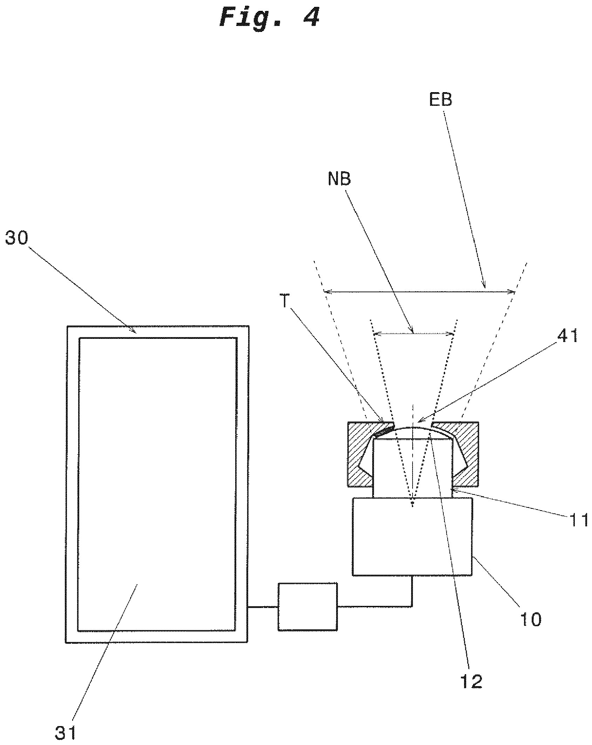

In Fig. 4 ist das Kamerasystem 100 aus Fig. 3 gezeigt. Im Unterschied zu dem ersten in Fig. 3 gezeigten Zustand ist in Fig. 4 der Wassertropfen T in den Spalt 42 geflossen (zweiter Zustand) und wird nicht länger auf dem Bildsensor und damit dem angezeigten Bereich 31 der Anzeigeeinheit 30 abgebildet. Beispielsweise kann der Wassertropfen T in den Spalt 42 gelangen, indem er durch den Fahrtwind und/oder Vibrationen während des Fahrbetriebs des Fahrzeugs F zu einer Außenseite des Nutzbereichs NB bewegt wird. Bei einer Berührung zwischen Wassertropfen T und dem Eingang in den Spalt 42 an der Sichtöffnung 41 gleitet der Wassertropfen in den Spalt 42. Dort bewegt er sich durch Fahrtwind und/oder Vibrationen und/oder nachfolgende Wassertropfen T innerhalb des Schutzelements 40 weg von der Sichtöffnung 41 in Richtung der Wasserabführöffnung 43 und wird durch die Wasserabführöffnung 43 aus dem Spalt 42 zur Fahrzeugumgebung abgelassen. So kann vermieden werden, dass bei starken Niederschlag, wie z.B. Starkregen, der Spalt 42 bzw. der Zwischenraum zwischen Schutzelement 40 und optischen Element 11 bzw. Halterung 13 voll mit Wasser läuft und die Funktion des optischen Elements 11 beeinträchtigt, indem keine weiteren Wassertropfen mehr abgeführt werden können oder - bei entsprechender Witterung - das Wasser in dem Spalt 42 bzw. der Zwischenraum zwischen Schutzelement 40 und optischen Element 11 bzw. Halterung 13 gefriert und das Schutzelement 40 beschädigt.

Alternativ oder zusätzlich, bei geeigneter Dimensionierung des Spalts 42, kann der Wassertropfen T auch durch Kapillareffekt in den Spalt 42 hineingesogen werden, sobald er den Eingang des Spalts 42 berührt. Da der Kapillareffekt von der Größe des Spalts 42 in Relation zu der Größe des Wassertropfens T abhängt, kann der Spalt einen über seine Erstreckung oder einen quer zur Fließrichtung des Tropfens veränderlichen Querschnitt aufweisen, um so möglichst viele in Form und Größe unterschiedliche Wassertropfen T zuverlässig von dem Nutzbereich NB des optischen Elements zu entfernen. Die Nutzung des Kapillareffekts hat den Vorteil, dass die sich auf dem Nutzbereich NB befindlichen Wassertropfen T schneller als verglichen ohne Kapillareffekt und auch in Richtungen, die sonst aufgrund der Gravitationskraft keine Tropfenbewegung ermöglichen, abfließen können.

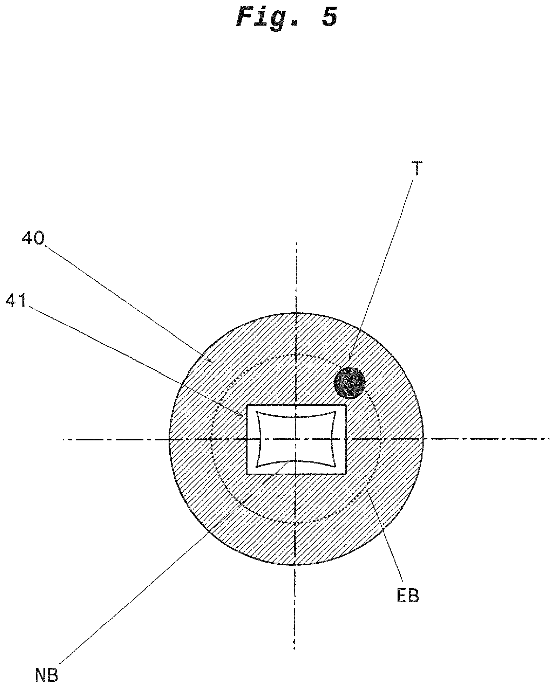

In Fig. 5 ist eine Vorderansicht des Kamerasystems aus Fig. 4 gezeigt. Wie in Fig. 5 gezeigt ist, entspricht die Geometrie und Größe der Sichtöffnung 41 des Schutzelements 40 in etwa der Geometrie und Größe des Nutzbereichs NB. Genauer ist die Sichtöffnung 41 etwas größer als der Nutzbereich NB und ist ein regelmäßiges Rechteck. Es sollte jedoch verstanden werden, dass der Nutzbereich NB und damit auch die Sichtöffnung 41 jede andere Geometrie und Größe annehmen können - abhängig von dem optischen Element 11 und den Anforderungen an den Nutzbereich NB.

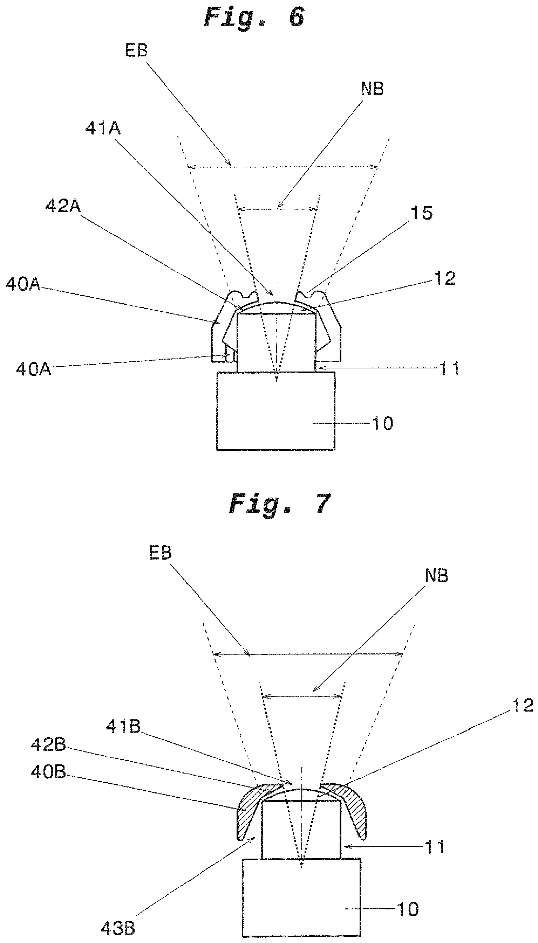

Fig. 6 bis Fig. 9 zeigen unterschiedliche Ausführungsformen (eine zweite bis fünfte Ausführungsform) des erfindungsgemäßen Schutzelements 40.

In Fig. 6 ist eine zweite Ausführungsform des Schutzelements 40A gezeigt. Im Gegensatz zu der ersten Ausführungsform des Schutzelements 40 weist das Schutzelement 40A auf der Außenseite, die dem Lichteinfallsbereich EB gegenüber liegt, eine umlaufende Außennut 15 auf. Die Außennut 15 ist konzentrisch um eine Sichtöffnung 41A herum vorgesehen und dient der Verwirbelung von Luft, um Wassertropfen die sich auf dem Nutzbereich NB befinden in Richtung eines Spalts 42E zu treiben und/oder um Wassertropfen T, die sich auf der Außenseite des Schutzelements 40A befinden daran zu hindern, auf den Nutzbereich NB zu fließen. Wie das Schutzelement 40 weist auch das Schutzelement 40A eine Wasserabführöffnung entfernt von der Sichtöffnung 41A auf.

In Fig. 7 ist eine dritte Ausführungsform des Schutzelements 40B gezeigt. Bei der in Fig. 7 gezeigten Ausführungsform des Schutzelements 40B, ist das Schutzelement 40B Teil eines Kameragehäuses (nicht gezeigt). In diesem Fall fließen die Wassertropfen T über die Wasserabführöffnung 43B nicht unmittelbar zur Fahrzeugumgebung, sondern zunächst in das Kameragehäuse. Um die Wassertropfen T jedoch gezielt zur Fahrzeugumgebung abzuleiten, muss vorliegend auch das Kameragehäuse eine Öffnung aufweisen, die eine Verbindung zur Fahrzeugumgebung herstellt und einen Abfluss der Wassertropfen gewährleistet. Das in Fig. 7 gezeigte Schutzelement 40B weist eine Sichtöffnung 41B und einen Spalt 42B auf, wie sie bereits oben in Bezug auf die Schutzelemente 40 und 40A beschrieben sind.

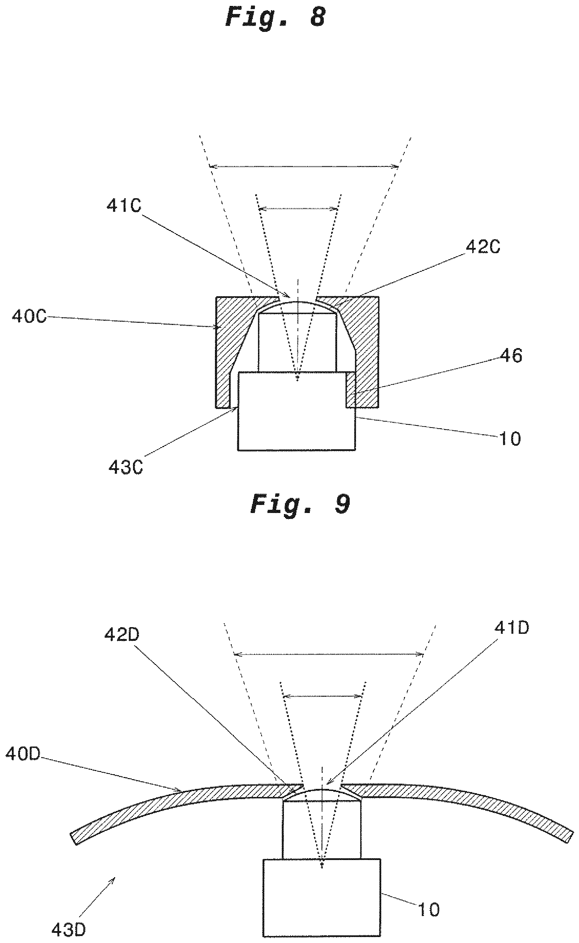

In Fig. 8 ist eine vierte Ausführungsform des Schutzelements 40C gezeigt, die sich von der in Fig. 6 gezeigten zweiten Ausführungsform darin unterscheidet, dass die Wasserabführöffnung 43C durch Vorsehen einer Nut in der Innenfläche des Schutzelements 40C gebildet wird. Ferner ist das Schutzelement 40C nicht, wie in Fig. 3 gezeigt, mit dem optischen Element 11 bzw. der Halterung 13 verklemmt, sondern über eine Gewindeverbindung 46 mit dem optischen Element 11 bzw. der Halterung 13 verbunden. Das in Fig. 8 gezeigte Schutzelement 40C weist eine Sichtöffnung 41C und einen Spalt 42C auf, wie sie bereits oben in Bezug auf die Schutzelemente 40, 40A und 40B beschrieben sind.

In Fig. 9 ist eine fünfte Ausführungsform des Schutzelements 40D gezeigt. Im Gegensatz zu den bisherigen Ausführungsformen des Schutzelements 40, 40A, 40B, 40C ist das Schutzelement 40D Teil einer Kamerahalterung bzw. eines Kameragehäuses, genauer eines Kameraarms (nicht gezeigt). Dazu ist das Schutzelement über Stege (nicht gezeigt) mit dem Kameraarm verbunden. Wie bei der in Fig. 7 gezeigten Ausführungsform werden auch bei dem Schutzelement 40D die Wassertropfen nicht unmittelbar nach Durchlaufen eines Spalts 42D und der Wasserabführöffnung 43D zur Fahrzeugumgebung abgegeben, sondern werden zunächst in den Kameraarm abgegeben und von dort über eine entsprechende Öffnung in dem Kameraarm zur Fahrzeugumgebung abgelassen. Das in Fig. 9 gezeigte Schutzelement 40B weist eine Sichtöffnung 41D auf, wie sie bereits oben in Bezug auf die Schutzelemente 40, 40A, 40B und 40C beschrieben ist.

Insbesondere in Bezug auf die in den Fig. 7 und 9 gezeigten Ausführungsformen, in denen das Schutzelement 40B, 40D als Teil eines Kameragehäuses ausgebildet ist, kann es von Vorteil sein, wenn die Sichtöffnung 41B und 41D etwas größer als der Nutzbereich NB ausgebildet sind. Dies hat den Vorteil, dass die Kamera 10 in einem gewissen, d.h. durch die Größe und Geometrie der Sichtöffnung 41B, 41D vorgegebenen Rahmen geschwenkt bzw. verstellt werden kann, ohne dass der Spalt 42B, 42D von der Kamera 10 (insbesondere von dem optischen Element 11 oder der Halterung 13) verschlossen wird oder der Nutzbereich NB von dem Schutzelement 40B, 40D verdeckt wird.

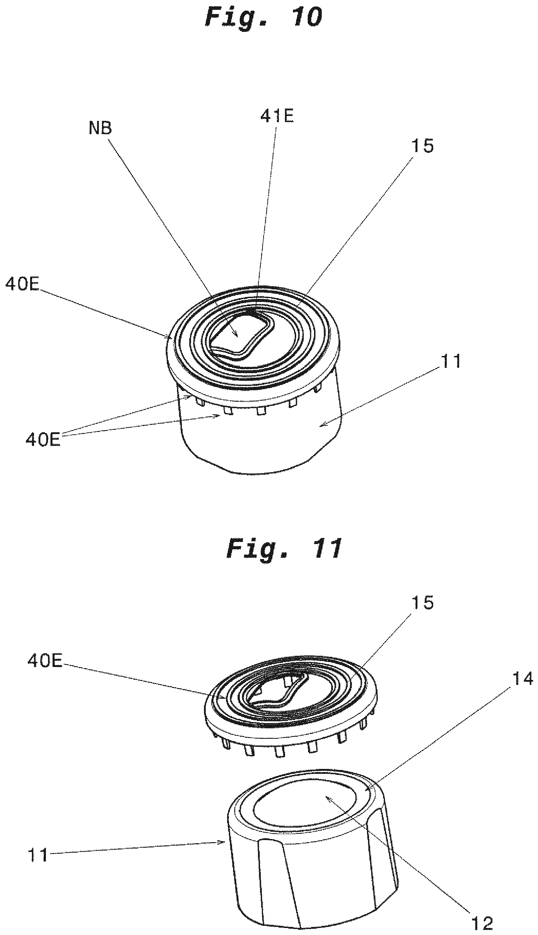

In Fig. 10 ist eine sechste Ausführungsform des Schutzelements 40E in einem montierten Zustand gezeigt. Das in Fig. 10 gezeigte Schutzelement 40E unterscheidet sich maßgeblich von den vorigen Schutzelementen 40, 40A, 40B, 40C und 40D, indem es auf seiner Außenfläche mit mehreren (in Fig. 10: drei) konzentrisch angeordneten Außennuten 15 und entlang seines Umfangs mit Federlaschen versehen ist. Wie bereits in Bezug auf die Ausführungsform in Fig. 6 ausgeführt, dienen die Außennuten 15 der Verwirbelung von Luft, um Wassertropfen T die sich auf dem Nutzbereich NB befinden, in Richtung eines Spalts 42E zu treiben und/oder um Wassertropfen T, die sich auf der Außenseite des Schutzelements 40E befinden daran zu hindern, auf den Nutzbereich NB zu fließen. Wie in Fig. 10 gezeigt ist, ist die Sichtöffnung 41E in etwa rechteckig ausgebildet und ist in Bezug auf das Schutzelement 40E außermittig angeordnet.

Die Federlaschen sind in etwa senkrecht zu der Sichtöffnung 41E von einem entfernten Rand des Schutzelements 40E über den Umfang des Schutzelements 40E hervorstehende Metallplättchen. Durch ihre federnde Ausgestaltung erlauben sie ein einfaches, aber zugleich zuverlässiges Anbringen des Schutzelements 40E an einem optischen Element 11.

Fig. 11 zeigt die in Fig. 10 gezeigte Ausführungsform des Schutzelements 40E in einem demontierten Zustand. Wie in Fig. 11 gezeigt ist, ist um das optische Element 11 ein Objektivring 14 angebracht, der eine derart zu einer Mitte des optischen Elements abwärts geneigte Oberfläche aufweist, dass zwischen Lichteinfallsbereich EB des optischen Elements 11 und dem Objektivring 14 ein Tal vorhanden ist. Dieses Tal ist ohne das Vorsehen eines Schutzelements 40E und eines Spalts 42E nachteilig, da Wassertropfen T sich dort verfangen. Durch Vorsehen des Schutzelements 40E und des Spalts 42E können Wassertropfen T jedoch auch in diesem Fall über den Spalt 42E und die Wasserabführöffnung 43E zuverlässig abtransportiert werden.

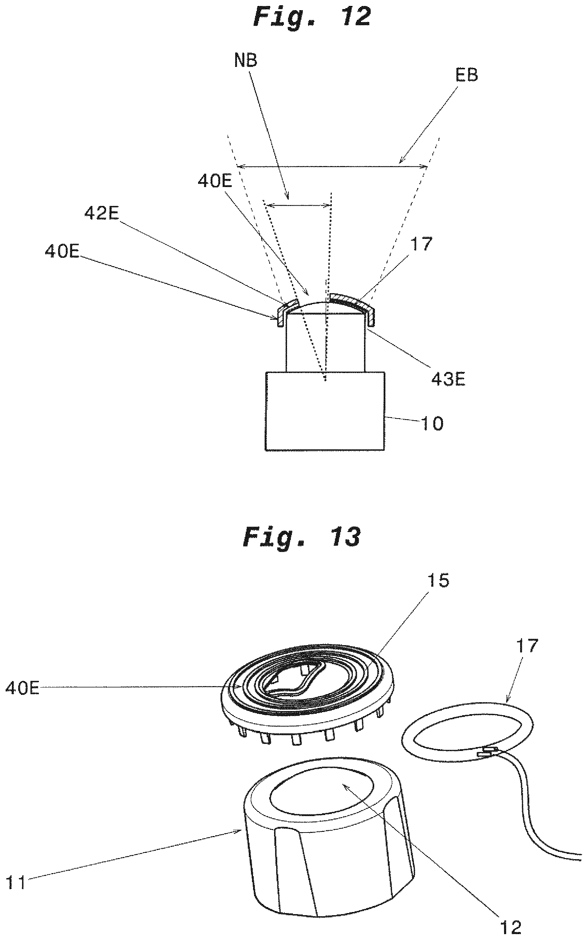

Fig. 12 und 13 zeigen das Schutzelement 40E aus Fig. 11. In den Spalt 42E zwischen Schutzelement 40E und dem optischen Element 11 ist ein Heizelement 17 eingebracht. Das Heizelement 17 ist, wie in Fig. 13 zu sehen, ein ringförmiges Element, das über zwei Kabel mit Strom beaufschlagt wird, und so erhitzt wird. Beispielsweise ist das Heizelement 17 ein Heizdraht. Alternativ kann das Heizelement 17 aber auch eine Heizfolie sein, die vorzugsweise auf eine Innenseite des Schutzelements 40E geklebt wird, die den Spalt 42E bildet. Das Heizelement 17 dient dazu, die Kamera und insbesondere das optische Element zu enteisen oder Kondenswasser von dem optischen Element durch Verdunstung zu entfernen.

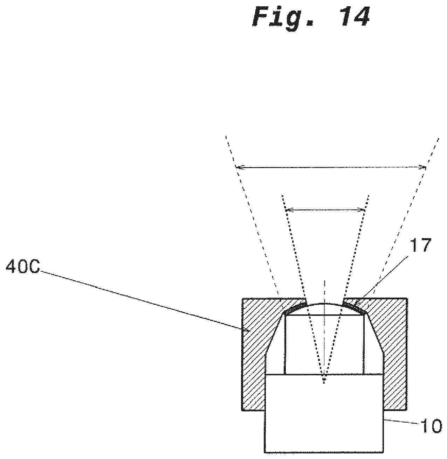

Fig. 14 zeigt das Schutzelement 40C aus Fig. 8 mit einem Heizelement in dem Spalt 42C.

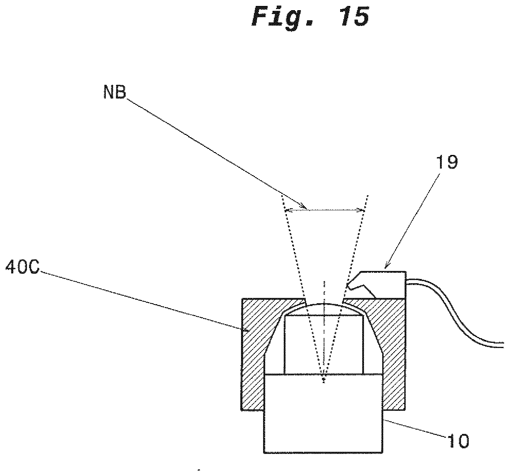

Fig. 15 zeigt die Ausführungsform des Schutzelements 40C aus Fig. 8 mit einer Luftdüse 19, die an einer Außenfläche des Schutzelements 40 angebracht ist. Die Luftdüse 19 ist dazu ausgebildet, Luft auf den Nutzbereich NB zu blasen und so die sich dort im Betrieb möglicherweise befindlichen Wassertropfen T gezielt zu einem Randbereich des Nutzbereichs NB, d.h. in Richtung des Schutzelements 40C und des Spalts 42C, zu drängen. Alternativ kann die Luftdüse auch so angeordnet sein, dass sie Wassertropfen T auf einer Außenseite des Schutzelements 40C daran hindert, auf den Nutzbereich NB zu gelangen. Es können auch mehr als eine Luftdüse vorgesehen sein und/oder die Luftdüse kann mit einem Heizelement 17 kombiniert werden.

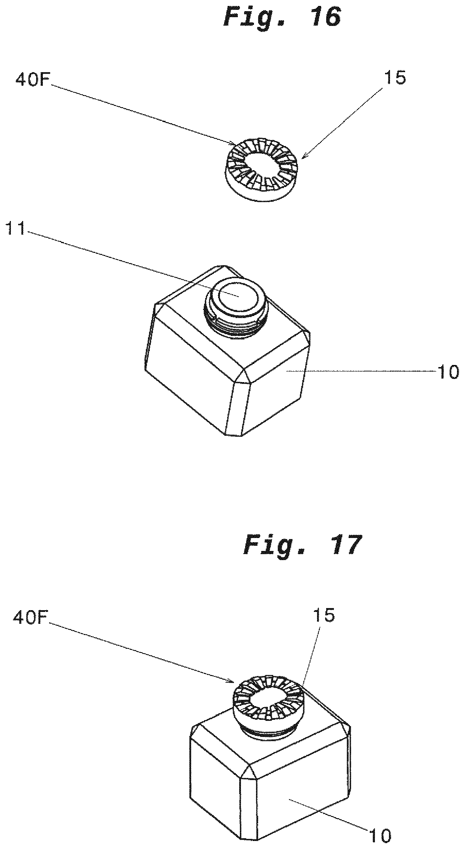

Fig. 16 und 17 zeigen ein erfindungsgemäßes Kamerasystem mit einem Schutzelement 40F, das als ein Deckel ausgebildet ist, der mit einem gewissen Abstand über dem optischen Element angeordnet wird. Das Schutzelement 40F weist auf der dem Lichteinfallsbereich EB gegenüberliegenden Außenseite radial verlaufende Außennuten 15 auf, die verhindern, dass Wassertropfen T auf der Außenseite des Schutzelements 40F auf den Nutzbereich NB gelangen. Vielmehr werden die Wassertropfen T auf der Außenseite des Schutzelements 40F durch Vibrationen des Fahrzeugs während des Fahrbetriebs und/oder durch Fahrtwind in die Außennuten gedrängt und dort radial zu einem äußeren Umfang des Schutzelements befördert. Bei der in Fig. 16 und 17 gezeigten Ausführungsform werden die Außennuten 15 durch auf einen Ring aufgebrachte Stege bzw. Rippen gebildet, die in einer radial nah innen gerichteten Richtung über den Ring überstehen und so Kanäle zwischen den Rippen entstehen, in die auch Wassertropfen T auf dem Nutzbereich NB hineinlaufen können. Es ist auch denkbar, die in Fig. 16 und 17 gezeigte Ausführungsform ohne einen Spalt zwischen Schutzelement 40F und optischem Element 11 auszubilden, so dass Wassertropfen T auf dem Nutzbereich NB ausschließlich über die Außennuten 15 abgeführt werden können.

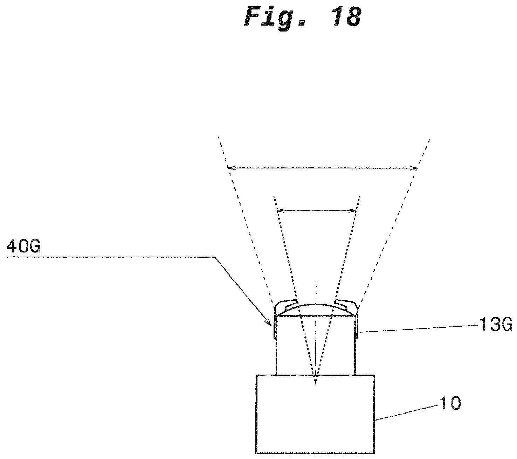

Fig. 18 zeigt ein Kamerasystem, bei dem das Schutzelement 40G in die Halterung 13G des optischen Elements 11 integriert ist, d.h. vorzugsweise als ein einziges Bauteil geformt ist. Insbesondere kann in diesem Fall ein Spalt zum Abführen von sich auf der Oberfläche des optischen Elements 11 befindenden Wassertropfen T so ausgebildet sein, dass er die Kapillarwirkung nutzt.

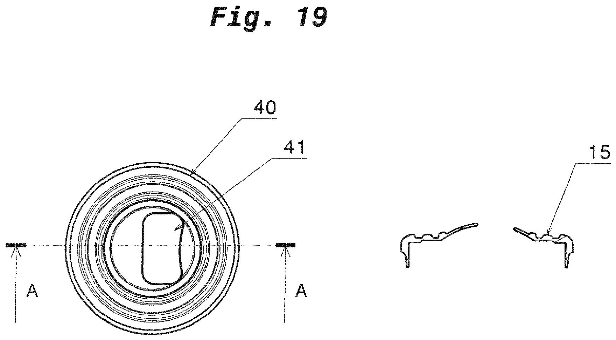

Fig. 19 zeigt eine detaillierte Draufsicht auf und einen Schnitt durch das Schutzelement 40 der ersten Ausführungsform. Wie in Fig. 19 gezeigt ist, sind die Außennuten 15 auf dem Schutzelement 40 als zwei konzentrisch um den Mittelpunkt des Schutzelements 40 angeordnete Kreise ausgebildet und der Spalt 42 zwischen optischem Element 11 und dem Schutzelement 40 nimmt von einem an die Sichtöffnung 41 angrenzenden Bereich in einer Richtung zu einem Außenumfang des Lichteinfallsbereichs ab.

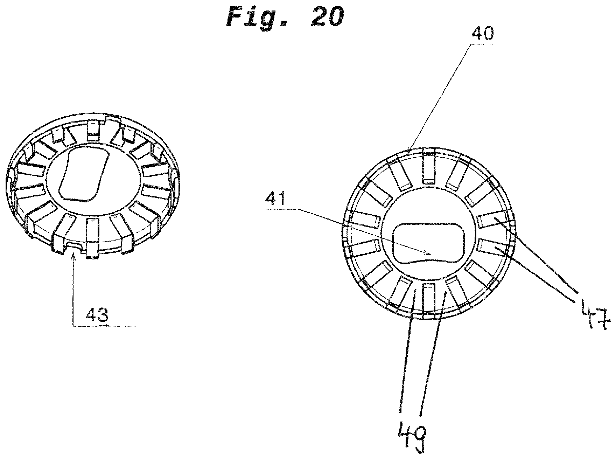

Fig. 20 zeigt verschiedene Ansichten des Schutzelements 40. Insbesondere zeigt Fig. 20 eine perspektivische Unteransicht sowie eine Ansicht direkt von unten des Schutzelements 40, die zeigen, dass der Spalt 42 durch eine Vielzahl von Innennuten 49 gebildet wird, die radial zu einem äußeren Umfang des Schutzelements 40 verlaufen und so Kanäle zum Abführen von Wassertropfen T bilden. Bei der in Fig. 20 gezeigten Ausführungsform sind die Innennuten durch Anbringen von Rippen 47 auf einer Innenfläche des Schutzelements 40 gebildet.

Schließlich kann Fig. 20 noch entnommen werden, dass die Wasserabführöffnung 43 als Auskerbung an einem Rand des Schutzelements 40 angeordnet sein kann.

Grundsätzlich ist es auch denkbar, das Kamerasystem ohne Wasserabführöffnung auszuführen, wenn sichergestellt ist, dass das in den Spalt eindringende Wasser so wenig ist, dass es durch Verdunstung wieder entfernt wird, ehe es sich in nennenswerten Mengen im Spalt sammelt.

### BEZUGSZEICHENLISTE

- 100: Kamerasystem
- 10: Kamera
- 11: optisches Element
- 12: zu einer Fahrzeugumgebung ausgerichtete Fläche des optischen Elements
- 13, 13G: Halterung für optisches Element
- 15: Außennut
- 17: Heizelement
- 19: Luftdüse
- 20: Verarbeitungseinheit
- 30: Anzeigeeinheit
- 31: angezeigter Bereich
- 32: Abbildung des Wassertropfens T
- 40, 40A, 40B, 40C, 40D, 40E, 40F, 40G: Schutzelement
- 41, 41A, 41B, 41C, 41D, 41E: Sichtöffnung
- 42, 42A, 42B, 42C, 42D, 42E: Spalt
- 43, 43A, 43B, 43C, 43D, 43E: Wasserabführöffnung
- 46: Gewindeverbindung
- 47: Rippen
- 49: Innennuten
- F: Fahrzeug
- EB: Lichteinfallsbereich
- NB: Nutzbereich
- T: Wassertropfen

## Patentansprüche

1. Kamerasystem (100) für ein Fahrzeug (F), enthaltend
eine Kamera (10) zum Aufnehmen der Fahrzeugumgebung, wobei die Kamera (10) aufweist
ein optisches Element (11), das einen Lichteinfallsbereich (EB) aufweist, und
eine Halterung (13), die das optische Element (11) hält, und
ein Schutzelement (40, 40A, 40B, 40C, 40D, 40E, 40F), das separat zu dem optischen Element (11) und der Halterung (13) wenigstens über dem Lichteinfallsbereich (EB) des optischen Elements (11) positioniert ist und eine Sichtöffnung (41, 41A, 41B, 41C, 41D, 41E) aufweist, die einen Nutzbereich (NB) des Lichteinfallsbereichs (EB) frei lässt,
wobei wenigstens ein Spalt (42, 42A, 42B, 42C, 42D, 42E) zwischen dem optischen Element (11) und dem Schutzelement (40, 40A, 40B, 40C, 40D, 40E, 40F) zum Aufnehmen eines sich auf dem Nutzbereich (NB) befindlichen Wassertropfens (T) vorhanden ist,
wobei eine von der Sichtöffnung (41, 41A, 41B, 41C, 41D, 41E) entfernte Wasserabführöffnung (43, 43A, 43B, 43C, 43D, 43E) vorgesehen ist,
**dadurch gekennzeichnet dass**
der Spalt (42, 42A, 42B, 42C, 42D, 42E) durch eine Innennut (49) gebildet wird, die in wenigstens einer Fläche des Schutzelements (40, 40A, 40B, 40C, 40D, 40E, 40F) vorgesehen ist, die dem Lichteinfallsbereich (EB) des optischen Elements (11) zugewandt ist.

2. Kamerasystem (100) nach Anspruch 1, wobei der Spalt (42, 42A, 42B, 42C, 42D, 42E) derart dimensioniert ist, dass er bei dem Aufnehmen des Wassertropfens (T) eine Kapillarwirkung entfaltet.

3. Kamerasystem (100) nach Anspruch 1 oder 2, wobei das optische Element (11) eine hydrophobe Beschichtung aufweist.

4. Kamerasystem (100) nach einem der vorhergehenden Ansprüche, wobei der Spalt (42, 42A, 42B, 42C, 42D, 42E) einen sich über seine Erstreckung veränderlichen Querschnitt aufweist.

5. Kamerasystem (100) nach Anspruch 1, wobei die Innennut (49) sich radial zu einer Außenseite des Lichteinfallsbereichs (EB) erstreckt, oder
wobei die Innennut (49) sich wendelförmig zu einer Außenseite des Lichteinfallsbereichs (EB) erstreckt, oder
wobei die Innennut (49) sich annähernd konzentrisch um die Sichtöffnung (41) des Schutzelements (40, 40A, 40B, 40C, 40D, 40E, 40F) erstreckt.

6. Kamerasystem (100) nach Anspruch 1 oder 5, wobei die Innennut (49) einen sich in Au-ßenrichtung des Lichteinfallsbereichs (EB) quer zur Fließrichtung des Wassertropfens (T) veränderlichen Querschnitt aufweist, und/oder
wobei die Innennut (49) einen Kanal von der Sichtöffnung (41) bis zu der Wasserabführöffnung (43) bildet.

7. Kamerasystem (100) nach einem der vorhergehenden Ansprüche, wobei die auf das optische Element (11) gerichtete Fläche des Schutzelements (40, 40A, 40B, 40C, 40D, 40E, 40F) wenigstens eine Rippe (47) zum Vorsehen eines definierten Abstandes des Schutzelements (40, 40A, 40B, 40C, 40D, 40E, 40F) von dem optischen Element (11) aufweist, und/oder
wobei eine Außenseite des Schutzelements (40A, 40E) eine Geometrie (15) aufweist, die eine Luftverwirbelung verursacht zum Fördern einer Bewegung eines sich auf dem Nutzbereich (NB) befindlichen Wassertropfens (T) in Richtung Spalt und/oder zum Verhindern einer Bewegung eines sich auf der Außenseite des Schutzelements (40A, 40E) befindlichen Wassertropfens (T) in Richtung Sichtöffnung (41A, 41E).

8. Kamerasystem (100) nach einem der vorhergehenden Ansprüche, wobei das Schutzelement (40C) eine Düse (19) aufweist, die ein Medium auf den Lichteinfallsbereich (EB) des optischen Elements (11) aufbringt zum Fördern einer Bewegung eines sich auf dem Nutzbereich befindlichen Wassertropfens (T) in Richtung Spalt und/oder zum Verhindern einer Bewegung eines sich auf der Außenseite des Schutzelements (40C) befindlichen Wassertropfens (T) in Richtung Sichtöffnung (41).

9. Kamerasystem (100) nach einem der vorhergehenden Ansprüche, wobei das Schutzelement (40B, 40D) ein Teil des Kameragehäuses oder des Kamerahalters ist.

10. Kamerasystem (100) nach einem der vorhergehenden Ansprüche, wobei das Schutzelement (40C) ferner ein Heizelement (17) aufweist, wobei das Heizelement (17) vorzugsweise in dem Spalt (42C) angeordnet ist und weiter vorzugsweise eine Heizfolie ist.

11. Kamerasystem (100) nach einem der vorhergehenden Ansprüche, wobei das Schutzelement (40, 40A, 40B, 40C, 40D, 40E, 40F) aus einem Thermoplast, einem Duroplast, einem Elastomer, einem metallischen Material oder Kombinationen davon gebildet ist, und/oder
wobei das Schutzelement (40, 40A, 40B, 40C, 40D, 40E, 40F) eine Shore-Härte von weniger als 60 Shore aufweist, und/oder
wobei das Schutzelement (40, 40A, 40B, 40C, 40D, 40E, 40F) eine hydrophile Beschichtung aufweist.

12. Kamerasystem (100) nach einem der vorhergehenden Ansprüche, wobei die Sichtöffnung (41, 41A, 41B, 41C, 41D, 41E) und der Spalt (42, 42A, 42B, 42C, 42D, 42E) so dimensioniert sind, dass ein Verstellen der Kamera (100) in einem gewissen Bereich ohne Verdecken des Nutzbereichs (NB) durch das Schutzelement (40, 40A, 40B, 40C, 40D, 40E, 40F) und Verschließen des Spalts (42, 42A, 42B, 42C, 42D, 42E) möglich ist.

13. Kamerasystem (100) nach einem der vorhergehenden Ansprüche, wobei das Kamerasystem (100) Teil eines Spiegelersatzsystems ist.

## Claims

1. Camera system (100)for a vehicle (F), comprising
a camera (10) for capturing a vehicle environment, wherein the camera (10) has
an optical element (11),which has a light incidence portion (EB), and
a retainer (13), which supports the optical element (11), and
a protection element (40, 40A, 40B, 40C, 40D, 40E, 40F), which is positioned separately to the optical element (11) and the retainer (13) at least over the light incidence portion (EB) of the optical element (11) and has a sight opening (41, 41A, 41B, 41C, 41D, 41E), which exposes a use portion (NB) of the light incidence portion (EB),
wherein at least one gap (42, 42A, 42B, 42C, 42D, 42E) is present between the optical element (11) and the protection element (40, 40A, 40B, 40C, 40D, 40E, 40F) for capturing a water drop (T), which is located on the use portion (NB),
wherein a water drainage opening (43, 43A, 43B, 43C, 43D, 43E) is provided distally from the sight opening (41, 41A, 41B, 41C, 41D, 41E),
**characterized in that**
the gap (42, 42A, 42B, 42C, 42D, 42E) is formed by an inner notch (49), which is provided in at least one surface of the protection element (40, 40A, 40B, 40C, 40D, 40E, 40F), which surface faces the light incidence portion (EB) of the optical element (11).

2. Camera system (100) according to claim 1, wherein the gap (42, 42A, 42B, 42C, 42D, 42E) is dimensioned such that it develops a capillary action with receiving the water drop (T).

3. Camera system (100) according to claim 1 or 2, wherein the optical element (11) has a hydrophobic coating.

4. Camera system (100) according to any one of the preceding claims, wherein the gap (42, 42A, 42B, 42C, 42D, 42E) has a cross section, which changes along its extension.

5. Camera system (100) according to claim 1, wherein the inner notch (49) radially extends toward an outer side of the light incidence portion (EB), or
wherein the inner notch (49) spirally extends toward an outer side of the light incidence portion (EB), or
wherein the inner notch (49) extends approximately concentrically around the sight opening (41) of the protection element (40, 40A, 40B, 40C, 40D, 40E, 40F).

6. Camera system (100) according to claim 1 or 5, wherein the inner notch (49) has a cross section, which changes toward an outer direction of the light incidence portion (EB) laterally to the flowing direction of the water drop (T), and/or
wherein the inner notch (49) forms a channel from the sight opening (41) to the water drainage opening (43).

7. Camera system (100) according to claim 1 or 5, wherein the surface of the protection element (40, 40A, 40B, 40C, 40D, 40E, 40F) facing the optical element (11) has at least one rib (47) for providing a defined distance of the protection element (40, 40A, 40B, 40C, 40D, 40E, 40F) from the optical element (11), and/or
wherein an outer side of the protection element (40, 40E) has a geometry (15), which causes an air swirl for promoting a movement of a water drop (T), which is located on the use portion (NB) toward the gap and/or for preventing a movement of a water drop (T), which is located on an outer side of the protection element (40, 40E), toward the sight opening (41A, 41E).

8. Camera system (100) according to any one of the preceding claims, wherein the protection element (40C) has a nozzle (19), which applies a medium onto the light incidence portion (EB) of the optical element (11) for promoting a movement of a water drop (T), which is located on the use portion, toward the gap and/or for preventing a movement of a water drop (T), which is located on the outer side of the protection element (40C), toward the sight opening (41).

9. Camera system (100) according to any one of the preceding claims, wherein the protection element (40B, 40D) is a part of the camera housing or the camera retainer.

10. Camera system (100) according to any one of the preceding claims, wherein the protection element (40C) further has a heating element (17), wherein the heating element (17) is preferably arranged in the gap (42C) and further preferably is a heating film.

11. Camera system (100) according to any one of the preceding claims, wherein the protection element (40, 40A, 40B, 40C, 40D, 40E, 40F) is formed of a thermoplastic, a thermosetting plastic, an elastomer, a metallic material or combinations thereof, and/or
wherein the protection element (40, 40A, 40B, 40C, 40D, 40E, 40F) has a Shore-hardness of less than 60 Shore, and/or
wherein the protection element (40, 40A, 40B, 40C, 40D, 40E, 40F) has a hydrophilic coating.

12. Camera system (100) according to any one of the preceding claims, wherein the sight opening (41, 41A, 41B, 41C, 41D, 41E) and the gap (42, 42A, 42B, 42C, 42D, 42E) are dimensioned such that an adjustment of the camera (100) in a certain range is possible without covering the use portion (NB) by the protection element (40, 40A, 40B, 40C, 40D, 40E, 40F) and closing the gap (42, 42A, 42B, 42C, 42D, 42E).

13. Camera system (100) according to any one of the preceding claims, wherein the camera system (100) is part of a mirror replacement system.

## Revendications

1. Système de caméra (100) pour un véhicule (F), comprenant une caméra (10) pour capturer l'environnement du véhicule, la caméra (10) ayant un élément optique (11) qui a une zone d'entrée de lumière (EB), et un support (13) qui maintient l'élément optique (11), et un élément de protection (40, 40A, 40B, 40C, 40D, 40E, 40F), qui est positionné séparément de l'élément optique (11) et du support (13) au moins au-dessus de la zone d'entrée de lumière (EB) de l'élément optique (11) et qui a une ouverture de visualisation (41, 41A, 41B, 41C, 41D, 41E) qui laisse libre une zone d'utilisation (NB) de la zone d'entrée de lumière (EB), au moins une fente (42, 42A, 42B, 42C, 42D, 42E) étant présente entre l'élément optique (11) et l'élément de protection (40, 40A, 40B, 40C, 40D, 40E, 40F) pour recevoir une goutte d'eau (T) située sur la zone d'utilisation (NB), une ouverture d'évacuation d'eau (43, 43A, 43B, 43C, 43D, 43E) étant prévue à distance de l'ouverture de visualisation (41, 41A, 41B, 41C, 41D, 41E), **caractérisé en ce que** la fente (42, 42A, 42B, 42C, 42D, 42E) est formée par une rainure intérieure (49) qui est prévue dans au moins une surface de l'élément de protection (40, 40A, 40B, 40C, 40D, 40E, 40F) qui fait face à la zone d'entrée de lumière (EB) de l'élément optique (11).

2. Système de caméra (100) selon la revendication 1, la fente (42, 42A, 42B, 42C, 42D, 42E) étant dimensionnée de telle sorte qu'elle développe une action capillaire lors de la réception de la goutte d'eau (T).

3. Système de caméra (100) selon la revendication 1 ou 2, l'élément optique (11) ayant un revêtement hydrophobe.

4. Système de caméra (100) selon l'une des revendications précédentes, la fente (42, 42A, 42B, 42C, 42D, 42E) ayant une section transversale qui change sur son étendue.

5. Système de caméra (100) selon la revendication 1, la rainure intérieure (49) s'étendant radialement vers un côté extérieur de la zone d'entrée de lumière (EB), ou la rainure intérieure (49) s'étendant en forme de spirale vers un côté extérieur de la zone d'entrée de lumière (EB), ou la rainure intérieure (49) s'étendant approximativement de manière concentrique autour de l'ouverture de visualisation (41) de l'élément de protection (40, 40A, 40B, 40C, 40D, 40E, 40F).

6. Système de caméra (100) selon la revendication 1 ou 5, la rainure intérieure (49) ayant une section transversale qui change dans la direction extérieure de la zone d'entrée de lumière (EB) perpendiculairement à la direction d'écoulement de la goutte d'eau (T), et/ou la rainure intérieure (49) formant un canal s'étendant de l'ouverture de visualisation (41) à l'ouverture d'évacuation d'eau (43).

7. Système de caméra (100) selon l'une des revendications précédentes, la surface de l'élément de protection (40, 40A, 40B, 40C, 40D, 40E, 40F) dirigée vers l'élément optique (11) ayant au moins une nervure (47) pour fournir une distance définie de l'élément de protection (40, 40A, 40B, 40C, 40D, 40E, 40F) par rapport à l'élément optique (11), et/ou un côté extérieur de l'élément de protection (40A, 40E) ayant une géométrie (15) qui provoque une turbulence d'air pour favoriser un mouvement d'une goutte d'eau (T) située sur la zone d'utilisation (NB) en direction de la fente et/ou pour empêcher un mouvement d'une goutte d'eau (T) située sur le côté extérieur de l'élément de protection (40A, 40E) en direction de l'ouverture de visualisation (41A, 41E).

8. Système de caméra (100) selon l'une des revendications précédentes, l'élément de protection (40C) ayant une buse (19) qui applique un milieu sur la zone d'entrée de lumière (EB) de l'élément optique (11) pour favoriser un mouvement d'une goutte d'eau (T) située sur la zone d'utilisation en direction de la fente et/ou pour empêcher un mouvement d'une goutte d'eau (T) située sur le côté extérieur de l'élément de protection (40C) en direction de l'ouverture de visualisation (41).

9. Système de caméra (100) selon l'une des revendications précédentes, l'élément de protection (40B, 40D) étant une partie du boîtier de la caméra ou du support de la caméra.

10. Système de caméra (100) selon l'une des revendications précédentes, l'élément de protection (40C) comprenant en outre un élément chauffant (17), l'élément chauffant (17) étant de préférence disposé dans la fente (42C) et étant de plus préférence une feuille chauffante.

11. Système de caméra (100) selon l'une des revendications précédentes, l'élément de protection (40, 40A, 40B, 40C, 40D, 40E, 40F) étant formé d'un thermoplastique, d'un matériau thermodurcissable, d'un élastomère, d'un matériau métallique ou de combinaisons de ceux-ci, et/ou l'élément de protection (40, 40A, 40B, 40C, 40D, 40E, 40F) ayant une dureté Shore de moins de 60 Shore, et/ou l'élément de protection (40, 40A, 40B, 40C, 40D, 40E, 40F) ayant un revêtement hydrophile.

12. Système de caméra (100) selon l'une des revendications précédentes, l'ouverture de visualisation (41, 41A, 41B, 41C, 41D, 41E) et la fente (42, 42A, 42B, 42C, 42D, 42E) étant dimensionnées de telle sorte qu'un réglage de la caméra (100) dans une certaine plage est possible sans couvrir la zone d'utilisation (NB) par l'élément de protection (40, 40A, 40B, 40C, 40D, 40E, 40F) et sans fermer la fente (42, 42A, 42B, 42C, 42D, 42E).

13. Système de caméra (100) selon l'une des revendications précédentes, le système de caméra (100) faisant partie d'un système de remplacement de miroir.
